# EUROPEAN PATENT APPLICATION

(11) **EP 1 300 774 A1**
(43) Date of publication of application: **09.04.2003**
(21) Application number: 01123245.1
(22) Date of filing: 02.10.2001
(51) Int. Cl.: G06F 17/30

(54) **Rated information service**

(71) Applicant: Sun Microsystems, Inc., Palo Alto, California 94303 (US)
(72) Inventor: Andrae, Joost Reiner, 21107 Hamburg (DE)
(74) Representative: HOFFMANN - EITLE

(57) **Abstract**

Method and system for providing an information service includes receiving a search request from a user corresponding to desired information, obtaining a search index of information elements associated with the desired information, obtaining classifiers associated with the list of information elements from a rating index and processing the search index of information elements based on the classifiers. Thus, an improved presentation of information in response to a search request can be provided.

## Description

### Field of the Invention

The present application relates to a method for providing an information service and an information service unit.

### Background of the Invention

Computers are used for the widest range of increasingly versatile and thus sometimes complex applications, e.g., ranging from editing of text documents or spread sheet applications to complex software systems, e.g. for computer aided design or manufacturing, purchasing, computer aided banking applications and similar. Further, increasingly complex software applications are employed in the field of personal services, for example in personal data organization and mobile communication applications such as mobile telephones or other services provided over computer networks, such as the Internet.

In any of the above examples users not fully acquainted with the software application may not be able to make use of the entire range of services provided by the application. Further, during executing the application, problems or faults may occur such as when accessing data, while printing, storing data or similar.

Therefore, specialized help applications have been developed for providing a user with information necessary for controlling applications or trouble shooting.

Further, more general information providing systems exist, which are adapted to present information on a particular subject to a user, for example over a computer network such as the Internet. Examples here are knowledge data bases, or the world wide web.

In any of these above outlined cases, wishing to obtain information on a particular topic, may it be help information on a particular functionality of an application or information on a particular subject, a user can generally enter a search string of characters or digits specifying the desired information or may otherwise select a certain topic. In response thereto, a list of candidate information elements will be presented to the user, from which the user can then select a particular information element.

As an example, if a user encounters problems during printing of a document, the user could provide a search string like "printer" to an information providing application. Similarly, if a user is interested in some type of information, for example historical information on Friedrich Barbarossa, the user could supply a search string such as "Friedrich Barbarossa" to a corresponding information providing application.

In response to receiving a search string like the above, an information providing application may create an index of offered topics matching the search string or otherwise linked to the search string. This list of offered topics can then be provided to the user. This list of topics may be linked to corresponding information elements in a database, and upon selecting one of the offered topics, the user will be provided with the desired information.

It is conceivable that topics or information elements presented in response to a particular search request can have varying quality. Some of the information elements may well suit the needs of the user, while other information elements are of lesser use. Further, some information elements may be well structured and easy to understand, while others are not. Some information elements may require large computing resources while others do not. Moreover, depending on a search request, an information service application may provide a potentially large list of topics or information elements. In particular, in large or complex applications such as the world wide web an index containing a potentially very large number of information elements could be presented to a user.

### Summary of the Invention

It is therefore desirable to provide an improved information service presenting an index of information elements suiting a user's need.

According to a first example, a method for providing an information service includes receiving a search request from a user corresponding to desired information; obtaining a search index of information elements associated with the desired information; obtaining classifiers associated with the list of information elements from a rating index; and processing the search index of information elements based on the classifiers. This example allows to provide an improved information service by processing a search index of information elements based on classifiers provided for rating the information elements. The presentation of information to a user based on the search request can be improved, e.g., by drawing the user's attention to information elements rated best.

The search request may include at least one character string indicating desired information, allowing a user to intuitively input for example a word describing the desired information.

Further, the search index may include addresses of storage locations of information elements. Thus, the search index itself may not contain the actual information, but only addresses of storage locations storing the information, allowing a retrieval of the information elements, for example over a communications network.

The information elements may be selected using a keyword search, e.g. based on the search string in a database of information elements.

Classifiers may reflect a user rating and indicate a quality of a corresponding information element, e.g., a perceived or absolute quality of an information element, facilitating the processing of the search index for improved presentation for user. In the above example, users may be enabled to input at least one quality rating in association with an information element, and the at least one quality rating may be utilized to form a classifier of the information element. Thus, a classifier can be based on one or a plurality of qualities, absolute or user perceived, for further improving the information service.

Still further, the classifiers may be derived from quality ratings of a plurality of users, allowing that a plurality of users contributes to a classifier such that the classifier can reflect a quality of an information element, as perceived by the users. The quality ratings may include at least one of the group consisting of: the clarity of the information element, conciseness of the information element and problem solving quality of the information element. Thus, the quality ratings can be selected such that classifiers become more meaningful for providing improved information services.

The information elements may include system information elements and user information elements, wherein users may be enabled to enter or modify the user information elements.

Thus, predefined system information elements may be advantageously supplemented by user information elements, created and submitted by users, allowing the collection of information elements to evolve in accordance with user information element submissions and corresponding quality ratings.

The processing operation of the example may include ordering the search index in accordance with the classifiers of the information elements received from the rating unit. Thus, a list of information elements to be presented to a user can be advantageously put into an order in correspondence to the classifiers such that for example an information element with the highest rating, i.e., the highest classification, can be presented to a user first or at a more prominent position.

Still further, the classifiers may be weighted in dependence on the property of being a service information element or a user information element. Thus, for example a system administrator may weight the classifiers to achieve an improved collection of service information elements and user information elements.

Still further, a user index may be generated based on at least part of the search index, in order to facilitate provision of a reduced amount of information to a user. For example, a user index could be generated based on a limited number of service information elements and/or user information elements. If classifiers associated with the list of information elements are unavailable, the user index may directly be transmitted to a user. Thus, even if classifiers are unavailable, information elements for serving the search request can be provided to the user.

The user index may include character strings indicative of the information elements and addresses of storage locations of the information elements. Thus, the user index may include descriptive elements, describing the type of information element and may be associated with a storage location storing the actual information of the information element, including remote storage locations.

A plurality of classifiers may be maintained for a user information element, each of the plurality of classifiers corresponding to a group of at least one search string and a classifier for the processing operation may be selected from the plurality of classifiers based on the search string. Thus, the processing of the search index may be made dependent on the search request, i.e. the search string, to reflect conditional qualities of an information element in view of a search string used.

A system administrator may be enabled to set at least one of the elements of the group consisting of: the predetermined number of information elements; a number of elements of a first sub-list including system information elements and a number of elements of a second sub-list including user information elements; and weights for weighing the classifiers. Thus, a system administrator may control the composition of information elements in a user index, in order to maintain a high quality of service. A user may communicate with an information service unit over a communications network, i.e. the method of the above examples can be provided in a client and server environment, with the client being located remote from the server.

According to another example, a program may include instructions adapted to carry out the method according to the above.

Still further, a computer readable medium may be provided in which a program is embodied, where the program is to make a computer execute the above method and a computer program product comprising the computer readable medium may be provided.

According to another example, an information service unit may be provided, including a communication unit for receiving a search request from a user regarding desired information; a processing unit for obtaining a search index of information elements associated with the desired information from an index unit and for obtaining classifiers associated with the list of information elements from a rating index; and wherein the processing unit is adapted for processing the search index of information elements based on the classifiers.

Further advantageous embodiments of the application are disclosed in further dependent claims.

### Brief Description of the Drawings

Throughout the figures alike reference numerals denote alike elements.
- Fig. 1: illustrates a system for providing an information service according to an embodiment of the application;
- Fig. 2: shows a flow diagram of operations carried out for providing an information service according to an embodiment of the application;
- Fig. 3: shows a flow diagram of operations carried out at a system for providing an information service according to an embodiment of the application;
- Fig. 4: illustrates a flow diagram of operations carried out at a system for providing an information service according to an embodiment of the application including inputting and storing user information elements;
- Fig. 5: illustrates operations for providing an information service according to an embodiment of the application, including operations for applying weighted classifiers; and
- Fig. 6: shows a flow diagram of operations at a system for providing an information service according to an embodiment of the application, including operations for inputting quality ratings by a user.

### Detailed Description of Preferred Embodiments

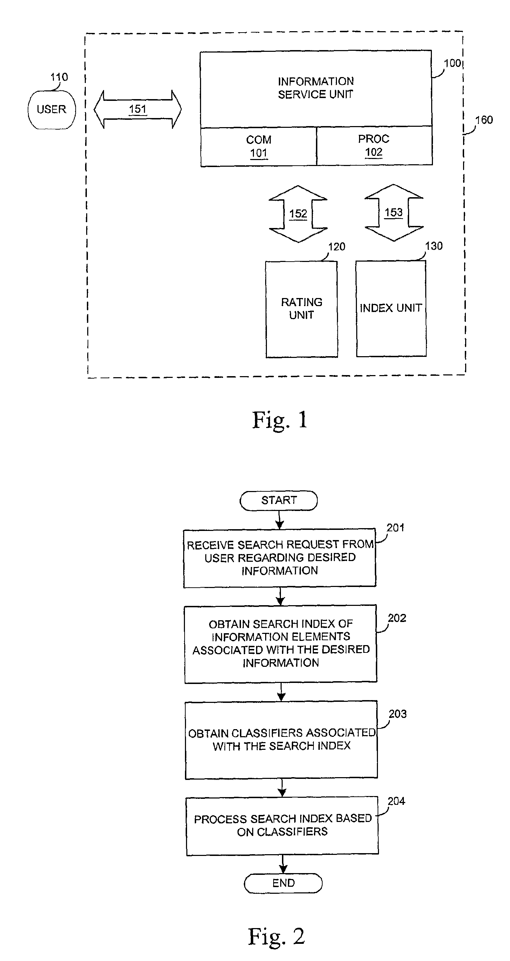

In the following a first embodiment of the application will be described with respect to Fig. 1.

Fig. 1 shows exemplary embodiment of a system for providing a rated information service according to an embodiment of the application.

Fig. 1 illustrates an information service unit 100, a user 110, a rating unit 120 and an index unit 130. The information service unit interacts with the user as indicated by an arrow 151, and interacts with the rating unit 120 and the index unit 130 as indicated by arrows 152 and 153.

The information service unit includes a communication unit 101 for receiving a search request from the user 110 specifying desired information, e.g. via a keyboard, a user device or a client device. Further, the information service unit includes a processing unit 102 for obtaining a search index of information elements associated with the desired information from the index unit 130 and for obtaining classifiers associated with the list of information elements from the rating unit 120. The processing unit 102 is further responsible for processing the search index of information elements based on the classifiers.

The application advantageously allows to process a search index in accordance with classifiers rating the information elements in order to provide an improved selection, arrangement and/or presentation of information elements for a user. Thus, in an environment where a search request would result in a collection of information elements with varying usefulness for a user and/or a large and confusing number of information elements, based on a processing of the search index of information elements, a structuring of the search result can be improved and/or the amount of storage space for an information index can be reduced, and/or a communication bandwidth between the information service unit and the user can be reduced.

The information service unit 100, the user device 110, the rating unit 120 and the index unit 130 may partially or fully be distributed and remotely connected through communication links. In this case the arrows 151 - 153 would constitute communication operations over communication links, including communication networks, such as the Internet, local area networks, or dedicated communication lines. A user could then communicate with the information service unit via the user device 110 and the information service unit would operate to retrieve a search index from the index unit and classifiers from the rating unit and to perform an appropriate processing of the service index based on the classifiers, before presenting the processing result to the user via the user device.

However, it is also possible that some or all of the elements shown in Fig. 1 are partly or fully integrated into a single device, as illustrated by the box shown at 160. In this case, a user could directly enter a search request into the information service system, e.g. through a keyboard, and upon receiving the search request the information service unit would obtain a search index and the associated classifiers and perform an appropriate processing of the search index. A result of the processing could be displayed on a display device (not shown) connected to the information service system 160.

Even though only a single user device 110 is shown, it is understood that a plurality of user devices operated by a plurality of users can be in communication with the information service unit.

The embodiment shown in Fig. 1 may be employed in any kind of information service. For example, the embodiment shown in Fig. 1 could be employed in a helper application, allowing a user to access help information on a particular application controlled by a user. This application may include text processing applications, spread sheet applications, or more complex software systems. If a user encounters problems in controlling the application, or when a faulty operation of the application occurs, the user could enter a search request specifying the encountered problem or faulty operation and submit the search request to the information service unit. The information service unit then generates a search index, based on a key word search or any techniques, including known techniques, including a list of information elements associated with the search request. Further, the information service unit obtains classifiers associated with the information elements of the search index and then process the search index based on the obtained classifiers. This may include an ordering of the information elements in accordance with the classifiers, removing certain information elements from the search index or processing individual information elements in accordance with the corresponding classifier, for example in order to provide a short version of an information element or a full version of an information element.

The help application referred to above can be in direct cooperation with a service application for providing help topics upon encountering problems. Thus, the helper application can form an integral part of the service application, as it is known in many today's application programs. Further, the help application can be an independent program, receiving a call from a service application if a help service is requested. In this case, the helper application could be arranged at an arbitrary location, including a location remote from a service unit and could be launched upon receiving a call for a help service from the service application.

Still further, the application may be embodied in a general information service application, for example a knowledge database. Still further, the application could be embodied or provided in association with a browser application for browsing information on the Internet or in association with a search engine for searching information on the Internet.

The application can be used to improve the presentation of an index of information elements related to desired information based on classifiers associated with the information elements. The application allows to order the information elements, to reduce the number of presented information elements, or similar. Further, the application may be used to process information elements in association with classifiers, e.g., in order to provide a short version of an information element or a full version of an information element. Still further, the application allows to reduce an amount of data provided to a user, for example to save bandwidth resources on a connection between the information service unit and a user operated device, or to reduce required amount of storage space or similar.

In the following the elements of the system shown in Fig. 1 will be outlined in further detail. It is noted that the following description is only intended for further illustration of the elements outlined above and shown in Fig. 1 and should not be construed as limiting.

First an example of the information service unit 100 will be described in detail.

The information service unit may be constituted by a general purpose data processing device or by a dedicated processing device, adapted to execute the above outlined functionality of the information service unit. Further, the information service unit, as the other elements of the system of Fig. 1, may form part of any data processing device such as a general purpose data processing device, a personal or laptop computer, a personal organization unit or a communication unit including a mobile communication unit such as a cellular or any other mobile telephone. Still further, it is possible that the functionality of the information service unit is at least partially realized as hardware circuitry.

In any case, operations of the information service unit can be controlled by a software program having encoded therein instructions to perform the above-outlined functionalities. Likewise, the communication unit 101 and the processing unit 102 can be realized by a software program executed on a general or dedicated data processing device or may at least be partially be integrated as hardware circuitry.

The communication unit may be adapted to receive a user request either directly from a user, input directly into the communication unit, or may be adapted to receive a communication request from the user via a communication link, e.g. through one or a plurality of remotely located user devices. The communication unit may include the required circuitry to provide a communication port and processing of received information. Further, the communication unit may include a keyboard for direct input of a search request by a user.

The search request may include at least one character string indicating the desired information. For example, the user could enter a search string such as "printer" or "how to use a printer" as a basis of the search request to the information service unit. Further, the search request may include further information specifying the desired information. The user may include an identifier of a type of information elements desired, e.g. specifying at least one type of information such as graphics, video, text, audio information and similar. Further, the user can be enabled to include a maximum number of desired information elements. Moreover, the user may include a general identifier of a kind of information desired, e.g. including technical information, or information relating to other kinds of information, such as cultural, news information and similar.

The processing unit 102 includes required circuitry to communicate with the rating unit 120 and the index unit 130, either internally, if the index unit, the rating unit and the information service unit constitute a single entity, or externally through communication links, if the information service unit, rating unit and index unit constitute separate devices. Further, the processing unit 102 incorporates required functionality to process a search request or directly forward the search request to the index unit and rating unit. In any case it should be assured that the processing unit first obtains a search index based on the search request, i.e., a list of information elements in association with at least one search string contained in the search request from the user. Thereafter, the processing unit obtains classifiers corresponding to the information elements of the search index, e.g. from the rating unit.

The processing unit may generate a list of information elements including the addresses of storage locations of the information elements. The addresses in turn may be linked to short character strings describing the information element. For example, an information element may include information relating to connecting a printer to a data processing device and a corresponding entry in the search index may include a string like "connect printer to PC" which in turn is associated with an address of the actual information element, allowing access to the information element, including two remote storage locations of the information element. Accordingly, the search index will include a list of character strings describing the information element, each associated with an address of an actual storage location of the corresponding information element. Further, the search index may include addresses of storage locations of information elements, i.e., the search index may include identifiers of the information elements and addresses of storage locations of the actual content of the information elements such that based on a selection of an information element in the search index the content of the information element may be retrieved.

The rating index obtained from e.g. the rating unit 120 preferably includes the classifiers corresponding to the respective information elements of the search index. For example, the rating index could include a descriptor of an information element and an associated classifier, which may be constituted by an integer number or any other type of information specifying a value or nature of a classifier.

The search index and the rating index may be stored in corresponding data files or may be maintained in a random access memory of the information service unit, i.e. processing unit.

Further, the processing unit 102 may constitute a central processing unit of the information service unit or any other device adapted to obtain and process the search index based on the rating index. Thus, the processing unit may be adapted to access the search index and rating index as previously obtained by the processing unit 102 and appropriately process the search index based on the rating index to provide a user index for presentation to the user originally supplying the search request.

The processing of the information elements of the search index may include a rearrangement of an order of the information elements in the search index in accordance with the classifiers of the information elements received from the rating unit. Further, the processing could include removing an information element from the search index or could include adding control information to the information element to effect provision of a reduced version of the information element or full version of the information element upon a user selection of the information element. The classifiers may indicate a quality of the information element which may include the clarity of the information element, conciseness of the information element, problem solving quality of the information element, or a storage or processing requirement for the information element or similar.

Further, the processing unit may be adapted to utilize at least one of the above quality ratings to form the classifier of the corresponding information element. For example, the classifier could reflect a combination of storage requirements, clarity of the information element, conciseness and problem solving quality of the information element, or a subgroup of the quality ratings. Still further, the processing unit may be adapted to derive the classifiers from quality ratings of a plurality of users, such that the classifier reflects a perception of a large number of users and thus provides a good basis for processing the search index.

In the following an example of the index unit 130 and the rating unit 120 will be outlined in further detail.

As stated before, the rating unit 120 and the index unit 130 may be formed as an internal part of the information service system as indicated by reference numeral 160 in Fig. 1, or may be constituted by at least one separate entity including the functionality of the rating unit and index unit.

The index unit 130 is responsible for obtaining a search index including an offered list of information elements. The index unit may be realized as a database or any other data storage unit maintaining information elements and information associated with the information elements allowing to generate a search index based on a search request. For example, the index unit includes a central processing unit for receiving a character string included in the search request and to perform a keyword search in the database including the information elements based on a search string included in the search request.

Further, the central processing unit may select information elements in association with a search request based on further information included in the search request. For example, an identifier of a type of information elements desired can be included, e.g. at least one of graphics, video, text, audio information and similar. Further, a number can be included, specifying a number of information elements desired. Moreover a general identifier of a kind of information desired, e.g. including technical information, or information relating to other kinds of information, such as cultural, news information and similar.

The index unit may produce a search index also based on known techniques.

The rating unit 120 is responsible for providing classifiers associated with the information elements, i.e., the information elements of the search index. The rating unit, such as the index unit, may include a central data processing unit for maintaining rating information in association with information elements. For example, the data processing unit of the rating unit may receive classifiers from the information service unit and store the classifiers in association with the corresponding information elements. The classifiers may be maintained in a file or in a database, or via information linking classifiers to information elements.

In a further example, it is also possible that the rating unit incorporates functionality outlined before in connection with the processing unit 102 of the information service unit 100, in connection with receiving user ratings from a plurality of users and processing the user ratings to generate one or a plurality of classifiers in connection with an information element. The user ratings, as outlined before may relate to size of an information element, clarity, conciseness and problem solving quality. Thus, the rating unit may be provided with further intelligence for maintaining and updating classifiers based on user ratings. According to a further example it is also possible that the classifiers are directly stored in connection with the information elements, for example in a database storing the information element or in a database storing identifiers of the information elements. Thus, even though the rating unit and the index unit are shown as separate entities in Fig. 1, they may effectively be incorporated into a single device, provided remote from the information service unit, or which may be provided as an integral part of the information service unit.

The rating unit may also maintain a plurality of classifiers for a particular user information element, each of the plurality of classifiers corresponding to a group of at least one search string and wherein a classifier delivered to the information service unit is selected from the plurality of classifiers based on the search string or the group of search strings. A group of search strings could include search strings associated with a particular topic, such as install a printer. For example the group of search strings related to 'install printer' could include search strings like "connecting printer", "load driver", "initialising printer", "configuring printer" and the like.

In the following an example of the information elements and the processing of the search index with the list of information elements is outlined in further detail.

Processing the search index may include ordering the search index in accordance with the classifiers of the information elements received from the rating unit. The information elements may be arranged in a sequence in association with the classifiers, e.g. an information elements with the best rated classifier, such as the classifier with the highest associated integer number or floating point number, could be placed on top of a list of identifiers of information elements to be presented to a user. However, any other ordering of the information elements is possible, such as building different groups of information elements with classifiers within different ranges of values.

Processing the information elements may further include an ordering of the information elements in association with a type of information.

The processing may further include generating a user index for presentation to a user based on at least part of the search index, in order to avoid presentation of an excessive number of information elements to a user. A user may be enabled to specify the number of desired information elements in the user index. Further, a system administrator may set a number of information elements for a user index or may set a number of elements of a first sub-list including system information elements and a number of elements of a second sub-list including user information elements.

According to an example of the application, the information elements may include system information elements and user information elements. The user information elements constitute elements which can be entered and/or modified by users and the system information elements constitute information elements officially or originally provided by, e.g., the manufacturer or system administrator. It is also possible that all available information elements, i.e. system information elements and user information elements can be modified by users.

Thus, a user-adapted database of information elements can be provided.

The user index may include a first sub-list with system information elements and a second sub-list with user information elements.

Still further, it is possible that the processing unit 102 of the information service unit 100 is adapted to weigh the classifiers in dependence on the property of being a system information element or a user information element. For example, it may be provided that an index of information elements provided to a user always includes a certain number of system information elements or that a user information element requires a certain higher classification in order to be included in the index.

Still further, a user or system administrator may be enabled to specify a number of system information elements and/or user information elements in a user index.

The user index for presentation to the user, i.e., the processed search index, may include character strings indicative of the information elements, for example intuitive description of information elements allowing a user to make a decision whether to select an information element for further review. The user index may also include addresses of storage locations of the information elements, to enable a user to retrieve the corresponding information elements upon a selection, including remote retrieval. Nevertheless, it is possible that the information elements are directly included into the user index.

It is noted that the above elements of the information service system may at least partially be realized as software or hardware. Further, it is noted that a computer-readable medium may be provided having a program embodied thereon, where the program is to make a computer or system of data processing devices execute functions or operations of the features and elements of the above-described examples. A computer-readable medium can be a magnetic or optical or other tangible medium on which a program is recorded, but can also be a signal, e.g. analog or digital, electromagnetic or optical, in which the program is embodied for transmission. Further, a computer program product may be provided comprising the computer-readable medium.

In the following a further embodiment of the application will be described with respect to Fig. 2.

Fig. 2 shows operations according to the application for providing an information service. The operations shown in Fig. 2 may be carried out by the information service system shown in Fig. 1, however, Fig. 2 is not limited thereto.

The operations illustrated in Fig. 2 may be carried out in hardware or under software control using a single processing unit or a distributed processing unit. In case of a distributed unit, such as shown in Fig. 1, communications between the individual elements of the system can be achieved via dedicated communication links or communication networks, such as packet switch communication networks.

The embodiment shown in Fig. 2 can for example be employed in connection with helper applications associated with an application program, in which case information elements presented to a user could include information regarding controlling the application program or addressing faulty operations of the application program. Further, the embodiment shown in Fig. 2 can be employed in connection with any other information service, e.g. in retrieving and presenting information from a database including the Internet.

In a first operation 201 a search request is received from a user regarding desired information. The search request may be directly inputted into an information service unit, such as the information service unit 100 shown in Fig. 1, for example through a keyboard or any other input means, including selecting an item corresponding to the desired information on a display, e.g. using a mouse or any other selection device. Further, the search request may be received from a remote user operated unit.

Preferably, the search request input into the information service unit will at least include a character string specifying the desired information such as a search term or may include any other message specifying the desired information. For example, if a search request is generated by selecting an item standing for the desired information on a display, the search request could include any specification enabling the information service unit to derive which information is desired. Further, as outlined before, the search request may include an identifier of a type of information elements desired, e.g. specifying at least one type of information such as graphics, video, text, audio information and similar.

In an operation 202 the information service unit obtains a search index of information elements associated with the desired information. The search index may be generated internally by the information service unit or may be retrieved from an external unit, such as the index unit 130 shown in Fig. 1.

The search index may be generated for example via a keyword search using a character string included in the search request or may be generated by collecting a number of information elements associated with the search request, for example, if the search request, e.g. by clicking onto an icon on a display or similar, corresponds to a node in a treelike structure, the information elements could include items in association with the node in the treelike structure and elements of any dependent nodes, depending on the entry node of the treelike structure. In general, the search index can be generated by any kind of hashing algorithm, including known methods for generating a search index. One of the properties of the search index is the generation of a collection of a number of information elements in connection with a particular topic.

In a further operation 203 classifiers are obtained associated with the search index. The classifiers can be retrieved from an internal source within the information service unit or may be requested from an external unit such as the rating unit described with respect to Fig. 1. Preferably only classifiers are obtained, which correspond to one of the information elements obtained in operation 202.

The classifiers can be maintained in a memory with identifiers of information elements or may be maintained in direct association with the information elements.

A classifier stored in association with an information element indicates a quality of the information element which may include a required storage space for the information element, clarity of the information element, conciseness of the information element and/or problem solving quality of the information element. However, any other quality of the information element, including any physical qualities of the information element such as processing requirements associated with the information element and qualities as perceived by a user can be included when defining a classifier for an information element.

A plurality of classifiers may be maintained for a user information element, each of the plurality of classifiers corresponding to a group of at least one search string and a classifier for the processing operation may be selected from the plurality of classifiers based on the search string. Thus, the processing operation of the search index may also depend on the search string, to reflect conditional qualities of an information element in view of a search string used. Classifiers for a particular information element can also be maintained for each possible search string leading to inclusion of this information element into the search index. This reflects the fact that a perceived quality such as usefulness of an information element may depend on the search request, i.e. on the desired information.

After retrieving the classifiers, in dependence on the search request or not, in an operation 204 the search index obtained in operation 202 is processed based on the classifiers associated with the information elements of the search index obtained in operation 203. Processing of the search index can include any kind of rearrangement or reconfiguration of the search index based on the classifiers associated with the information elements. For example, the processing may include an ordering of the search index in accordance with the classifiers of the information elements which are, e.g. received from the rating unit.

Processing of the search index may further involve preparing a reduced version of the information element or likewise an enhanced version of the information element based on a classifier. For example, if the classifier corresponds to a 'high' rating of the information element, an enhanced version could be prepared, whereas, if the classifier indicates a low rating, a reduced version, e.g. without graphics and similar, could be prepared. Further, instead of preparing such an enhanced or reduced version may include adding an indicator to the search index instructing a corresponding preparation or provision of a reduced or enhanced version of the information element by further entities of the system.

The processing of the search index may further include a limitation of the number of information elements included in the search index.

The processed search index, constituting a user index, may then be presented to the user initiating the search request either locally, if the user is directly located at the information service unit, or remotely, if the user accesses the information service unit through a communication link or communication network.

Furthermore, the processed search index may be stored for future reference, for example in a database of user indexes. Thus, if a similar or the same search request is received at a later point in time, the user index may directly be presented to a user, thus reducing processing requirements in generating the search index, retrieving classifiers and processing the search index.

The embodiment outlined with respect to Fig. 2 allows the presentation of a user index containing information elements or references to information elements to a user with improved information access, i.e., the user index presented to a user can have an ordered and/or restricted and/or otherwise processed list of information elements allowing an easier access to information or a more intuitive access to information.

Further, the embodiment allows to take into account system capabilities such as a bandwidth between a user operated data processing device and the information service unit and/or display characteristics or storage capabilities at a user device, for example, resource requirements required for a presentation of an information element to a user can be reflected in the classifiers. For example, a user rating could include a specification of system requirement, e.g. latency, display, storage and similar characteristics in view of quality of the information content presented through the information element.

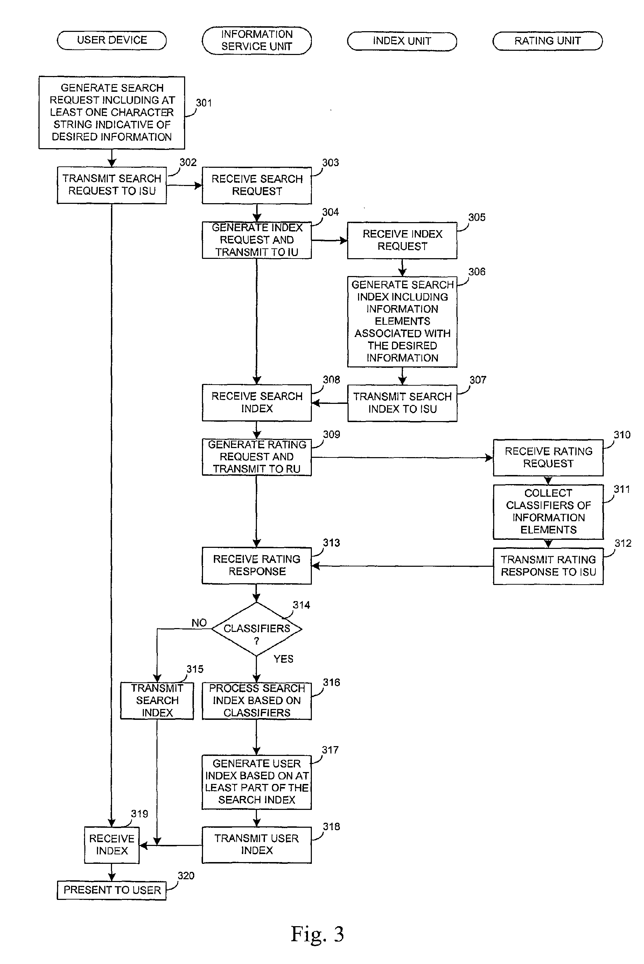

In the following a further embodiment of the application will be described with respect to Fig. 3.

Fig. 3 shows operations carried out at an information service system such as the information service system shown in Fig. 1, however, Fig. 3 is not limited thereto.

More specifically, Fig. 3 shows operations carried out at a user device such as for example user device 110 of Fig. 1, an information service unit, such as the information service unit 100 of Fig. 1, an index unit such as the index unit 130 of Fig. 1 and a rating unit such as the rating unit 120 of Fig. 1.

While the flow of operations is illustrated for separate units, i.e., assumes that the user device, the information service unit, the index unit and the rating unit are separate elements of the system, two or more of the elements of the system may be integrated in a single unit. For example, the information service unit, the index unit and the rating unit could form a single device, being in communication with a user operated user device. However, any other grouping of units into a single device is possible.

The user device may be constituted by a data processing device operated by a user at basically an arbitrary location being in communication with the information service unit. The user device could function as a client and the information service unit can function as a server. In this scenario the user device can be used to control operations of the information service unit, for example, if the information service is a help application associated with an application program, the user device could control the application program. This application program could be executed at the information service unit or at a data processing device cooperating with the information service unit, or, the application program could be executed at the user device while the information service unit provides a help service.

Further, the user device can be employed for using any other kind of information service provided by the information service unit in which case the user device would be used to generate and transmit to the information service unit a search request and to receive a list of information elements in response thereto from the information service unit. For example, the user device could run a browser application to access a search engine locally or over a network such as the Internet. The search engine could then retrieve information elements or identifiers associated with the information elements, corresponding classifiers and process the list of information elements in accordance with the classifiers before presenting the result to the user.

In a first operation 301 the user device generates a search request including at least one character string indicative of desired information. As outlined before, the character string or any other type of identifier specifies particular desired information. It is assumed that the search request formulated that a plurality of information elements are eligible as matching the search requests and therefore need to be presented to a user for a further more detailed selection of an information element.

In an operation 302 the search request is transmitted to the information service unit, where it is received in an operation 303. The transmission of the search request, as outlined before, may be performed using any kind of communication link, including dedicated or wireless communication links and/or communication networks, such as packet switched communication networks like the Internet or local area networks. The search request may be in a format suitable for transmission over a commonly used communication protocol.

At the information service unit, in an operation 304 an index request is generated. The index request preferably includes a character string indicative of the desired information received with the search request from the user or any other identifier of desired information. The index request is transmitted to the index unit where it is received in an operation 305. Transmission may be accomplished as outlined with respect to operations 302 and 303. If a communication between the information service unit and the index unit is performed locally, a transmission may also be accomplished via a system bus or internal communications between processing means and a memory may be used for accomplishing the transmission of the index request.

The index unit, based on the index request, in an operation 306, generates a search index of information elements associated with the desired information. Operation 306, as outlined before with respect to Fig. 1, may involve any kind of operation to collect information elements in association with the desired information, e.g. through a keyword search or any references included in the search request and/or references included in information elements leading to further information elements, e.g. in a tree-like structure.

In an operation 307 the search index is transmitted to the information service unit where it is received in an operation 308. Communications may be accomplished as outlined before.

In an operation 309 the information service unit generates a rating request and transmits same to the rating unit. As outlined before, this may be accomplished through any kind of communication link or network including internal connections over a system bus or in a processor memory communication. The rating request may include identifiers of the information elements obtained from the index unit and optionally information of the search request such as the search string or other type of information specifying the desired information from the user search request. The rating request is received at the rating unit in an operation 310 and in an operation 311 the rating unit collects classifiers associated with information elements of the search index. The classifiers may be retrieved from a memory based on identifiers of the information elements or by any other technique.

In an operation 312 a rating response is generated and transmitted back to the information service unit where it is received in an operation 313. The rating response includes the classifiers associated with the information elements of the search index.

As it is possible that classifiers in association with the information elements of the search index are unavailable, in an operation 314 it is identified, whether classifiers were included into the rating response and if the answer in operation 314 is "No", i.e., indicating that classifiers are unavailable, the information elements of the search index, or corresponding identifiers, are directly transmitted to the user, as illustrated by an operation 315.

If in operation 314 the decision is "Yes", indicating that classifiers for the information elements are available, the search index is processed based on the classifiers.

If classifiers are available only for some of the information elements, such information elements may be treated separately, for example placed to a bottom part of the list of information elements, be removed or similar. The processing of the search index may include ordering or arranging of the information elements of the search index in accordance with the classifiers, or similar, as outlined before.

In an operation 317 a user index is generated based on at least part of the search index. For example, the number of information elements to be presented to a user could be limited, e.g. by providing only such information elements in the user index which have classifiers above a certain threshold.

The classifiers may include a numerical indication of a quality of an information element such as an integer number or a floating point number or any other type of indication which allows a ranking of the classifiers.

For example, the number of information elements in the user index could be limited to a fixed number set by a user, or a system administrator or to a predefined number. Further, the user index could include only such information elements which have classifiers exceeding a certain predefined threshold, user defined threshold or a threshold set by a system administrator.

In an operation 318 the user index is transmitted to the user device, where it is received in an operation 319. Communications may be accomplished as outlined before.

Thereafter, in an operation 320 the user index can be presented to the user, for example on a display device as a list of identifiers of information elements, enabling a user to select at least one of the information elements from the list of information elements.

Even though not shown in Fig. 3, it is also possible that a selection of an information element presented to the user in operation 320 could lead to generating a new search request as outlined with respect to operation 301, e.g. by selecting one of the information elements of the search request. Thus, the method outlined with respect to Fig. 3 can be carried out iteratively, e.g. in order to provide information on different granularity.

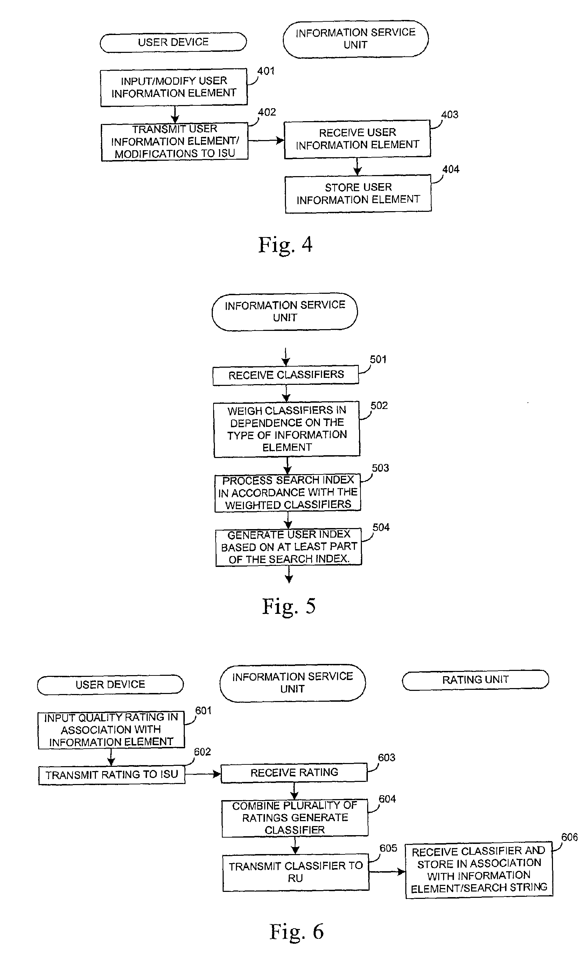

In the following a further embodiment of the application will be described with respect to Fig. 4.

Fig. 4 shows operations carried out at an information service unit, such as the information service unit 100 shown in Fig. 1, however, Fig. 4 is not limited thereto. Fig. 4 particularly outlines operations at the information service unit and the user device in association with information elements input by a user and storage of the user information elements in a database.

In this example a user is assumed to be enabled to define user information elements to supplement system information elements which are originally provided, e.g. by the manufacturer or system administrator. A user information element can relate to any kind of desired information supported by the system, similar to a system information element. Further, it is possible that the user information elements and/or the system information elements are modified by any of the users accessing the system.

In a first operation 401 at the user device a user inputs a user information element. The user information element can relate to an arbitrary information topic to be included into the system or may relate to an aspect of an information topic available in the system. The user information element may be written or otherwise created by a user, or may be retrieved from further sources by the user, e.g. from knowledge databases or any other sources of information.

Further, the user may provide certain keywords in association with the user information element, for example to enable a keyword search for establishing the search index, as outlined before.

In an operation 402 the user information element is transmitted to the information service unit, where it is received in an operation 403. For a transmission, the user may log onto the information service unit, if not already connected and may transmit a user information element obtained offline. Such techniques for establishing a connection are well known in the art and not further elaborated here. Further, the transmission from the user device to the information service unit may make use of any kind of communication link or communication network and any communication protocol.

In an operation 404 the user information element is stored, e.g. in a database, either locally at the information service unit or at any other location, including remote locations accessible through a communication link or data access network. User information elements may be maintained separate from system information elements in order to maintain a clear distinction between originally provided system information elements and user provided user information elements. The user information elements may then be made available for access in response to a search request, as outlined before.

The embodiment described with respect to Fig. 4 allows to draft on a potentially large community of users of an information system which provide updated or new knowledge to the information system to make it available to other users.

In the following a further embodiment of the application will be described with respect to Fig. 5.

Fig. 5 particularly outlines operations in connection with processing the search index, i.e. the list of information elements retrieved in response to the search request.

In a first operation 501 it is assumed that the information service unit receives classifiers in connection with user information elements and system information elements retrieved in accordance with a search request.

In an operation 502 the classifiers are then weighed in dependence on the type of information element present, i.e., based on the nature of being a user information element or a system information element. For example, in order to give system information elements, as the core of the information system, a higher priority, classifiers in connection with system information elements could be raised, whereas classifiers in connection with user information elements as user defined information could be reduced. Thus, in a user index system information elements will have a tendency to appear at more prominent location, that is, a location or presentation in accordance with the enhanced classifier.

In an operation 503 the search index with the list of information elements is then processed in accordance with the weighted classifiers, leading to a reordered or restructured list of information elements in accordance with the modified classifiers. It is also possible that user information elements are marked such that they are only displayed in a reduced version whereas system information elements are displayed in a full version.

In an operation 504 a user index for presentation to a user is generated based on at least part of the search index. For example, the number of information elements to be included in the user index can be limited to a fixed number, e.g. as specified by a user or a system administrator. Further, such a limited number of information elements could be specified individually for user information elements and system information elements such that a user or system administrator can take influence on a proportion of user information elements as compared to system information elements in a user index.

For example, a user can be prompted interactively to input an overall number of information elements or may be prompted to input a desired number of user information elements and/or system information elements.

The embodiment of Fig. 5 allows to impose certain restrictions on user information elements, in order to control a user influence on for example an information database.

In the following a further embodiment of the application will be outlined with respect to Fig. 6.

Fig. 6 shows operations at a user device, an information service unit and a rating unit, as for example shown in Fig. 1. However, Fig. 6 is not limited thereto. Fig. 6 particularly outlines operations in association with creating and maintaining classifiers for classifying information elements.

In general, a classifier may reflect a subjective quality of an information element, e.g. a quality as perceived by a user, like conciseness, clarity or similar. A subjective quality may be a rating judged by the user in dependence on a search request, i.e. the desired information. For example, a user may rate an information element retrieved based upon a first search request and retrieved based on a second search request differently, as in one case the information element may relate to the desired information better than in the second case. It is thus possible that a classifier of an information element associated with a search request only reflects the subjective assessment of the user, how well the information element fits his request, i.e. matches the desired information.

A classifier may also reflect an objective quality such as system requirements for transmitting, storing, processing and displaying an information element.

Further, a classifier may reflect a single quality or a plurality of qualities of an associated information element as perceived by a plurality of users. For example, a classifier may reflect a mean value of all quality ratings in association with an information element received from users. In order to avoid multiple rating inputs by a single user, a particular user, as for example identified by a user ID can be restricted to a single rating for a specific information element. A quality rating may relate to a perceived clarity of the information element, i.e. may reflect a subjective impression of a user regarding clarity. Further, a quality rating may reflect the perceived conciseness of the information element, i.e. a conciseness of the presented information. Still further, a quality rating may indicate a problem solving quality of the information element, i.e. to which extent an information element is suited to solve a particular encountered problem, for example when operating an application program. Moreover, a quality can reflect further subjective ratings such as the way of presentation of information, graphic representation, animations and similar.

Still further, the quality rating may reflect physical quantities such as a required bandwidth for retrieving an information element, required processing capabilities to present or process an information element at a user data processing device or similar.

In a first operation 601 a user inputs a quality rating in association with an information element at a user device. For example, upon retrieving and viewing an information element, or after executing an application in connection with an information element, a user may be prompted to input quality ratings in association with the information element. For example, the user may be prompted by a number of questions regarding allowed quality ratings. The user could input a quality rating either by inputting a number within an allowed range of numbers or by inputting character strings associated with a certain quality level. This could be achieved interactively, e.g. using a browser application or any other application allowing the input of data.

In an operation 602 the quality rating from a particular user in association with a particular information element is transmitted to the information service unit, where it is received in an operation 603. The transmission may be executed online or may be executed at an arbitrary point in time, for example, if the rating was input by the user offline, the rating could be transmitted to the information service unit the next time the user gets online. The quality rating may be transmitted to the information service unit together with information on the search request leading to the presentation of the information element to the user, to enable maintaining classifiers in association with both, search requests and information element.

At the information service unit, in an operation 604 a plurality of ratings from a plurality of users is combined to generate a classifier. Still further, a plurality of ratings regarding different qualities of an information element can be combined to generate a single classifier in association with the information element. This may include calculating a mean value of quality ratings from a user and may include calculating a weighted mean value of different quality ratings from a single user with regard to an information element.

In an operation 605 the classifier can then be transmitted to the rating unit, where it is received in an operation 606 and stored in association with the information element and, optionally, in association with a search string of the original search request.

While in the above examples of Figs. 2 - 6 operations are shown in a particular sequence, in other examples this sequence may not necessarily be adhered to.

According to another example, an information service unit may have the following elements.
1). Information service unit, including
   a code section containing instructions to receive a search request from a user regarding desired information;
   a code section containing instructions to obtain a search index of information elements associated with the desired information from an index unit and for obtaining classifiers associated with the list of information elements from a rating unit; and
   a code section containing instructions to process the search index of information elements based on the classifiers.
2). Information service unit according to 1), including a code section containing instructions to select the information elements are selected using a key word search.
3). Information service unit according to 1), including a code section containing instructions to receive a user input of at least one quality rating in association with an information element, and including a code section containing instructions to utilize the at least one quality rating to form a classifier of the information element.
4). Information service unit according to 1), including a code section containing instructions to derive the classifiers from quality ratings of a plurality of users.
5). Information service unit according to 1), including a code section containing instructions to order the search index in accordance with the classifiers of the information elements received from the rating unit.
6). Information service unit according to 1), including a code section containing instructions to weigh the classifiers in dependence on the property of being a service information element or user information element.
7). Information service unit according to 1), including a code section containing instructions to generate a user index based on at least part of the search index.
8). Information service unit according to 1), including a code section containing instructions to transmit the user index to a user, if classifiers associated with the list of information elements are unavailable.
9). Information service unit according to 1), including a code section containing instructions to maintain a plurality of classifiers for a user information element, each of the plurality of classifiers corresponding to a group of at least one search string and wherein the processing unit is adapted to perform the processing operation using a classifier selected from the plurality of classifiers based on the search string.
10). Information service unit according to 1), including a code section containing instructions enabling a system administrator to set at least one of the elements of the group consisting of:
   - the predetermined number of information elements;
   - a number of elements of a first sub-list including system information elements and a number of elements of a second sub-list including user information elements;
   - weights for weighting the classifiers.

It is noted that in all of the above examples the above elements for realizing the information service may at least partially be realized in software or hardware, in a single processing unit or a distributed processing unit. Further, it is noted that a computer-readable medium may be provided having a program embodied thereon, where the program is to make a computer or system of data processing devices execute functions or operations of the features and elements of the above-described examples. A computer-readable medium can be a magnetic or optical or other tangible medium on which a program is recorded, but can also be a signal, e.g. analog or digital, electromagnetic or optical, in which the program is embodied for transmission. Further, a computer program product may be provided comprising the computer-readable medium.

## Claims

1. Method for providing an information service, including
receiving a search request from a user corresponding to desired information;
obtaining a search index of information elements associated with the desired information;
obtaining classifiers associated with the list of information elements from a rating index; and
processing the search index of information elements based on the classifiers.

2. Method of claim 1, wherein the search request includes at least one character string indicating desired information.

3. Method of at least one of the preceding claims, wherein the search index includes addresses of storage locations of information elements.

4. Method of at least one of the preceding claims, wherein the information elements are selected using a key word search.

5. Method of at least one of the preceding claims, wherein a classifier reflects a user rating and indicates a quality of a corresponding information element.

6. Method of at least one of the preceding claims, wherein users can input at least one quality rating in association with an information element, and wherein the at least one quality ratings are utilized to form a classifier of the information element.

7. Method of at least one of the preceding claims, wherein the classifiers are derived from quality ratings of a plurality of users.

8. Method of at least one of the preceding claims, wherein a quality rating includes at least one of the group consisting of:
- clarity of the information element;
- conciseness of the information element; and
- problem solving quality of the information element.

9. Method of at least one of the preceding claims, wherein the information elements include system information elements and user information elements, wherein users can enter or modify at least the user information elements.

10. Method of at least one of the preceding claims, wherein the processing includes ordering the search index in accordance with the classifiers of the information elements received from the rating unit.

11. Method of at least one of the preceding claims, wherein the classifiers are weighted in dependence on the property of being a service information element or user information element.

12. Method of at least one of the preceding claims, including generating a user index based on at least part of the search index.

13. Method of at least one of the preceding claims, wherein, if classifiers associated with the list of information elements are unavailable, the user index is directly transmitted to a user.

14. Method of at least one of the preceding claims, wherein the user index includes character strings indicative of the information elements and addresses of storage locations of the information elements.

15. Method of at least one of the preceding claims, wherein a plurality of classifiers is maintained for a user information element, each of the plurality of classifiers corresponding to a group of at least one search string and wherein a classifier for the processing operation is selected from the plurality of classifiers based on the search string.

16. Method of at least one of the preceding claims, wherein a system administrator sets at least one of the elements of the group consisting of:
- the predetermined number of information elements;
- a number of elements of a first sub-list including system information elements and a number of elements of a second sub-list including user information elements;
- weights for weighting the classifiers.

17. Method of at least one of the preceding claims, wherein the user communicates with an information service unit over a communications network.

18. A program having instructions adapted to carry out the method of one of the preceding claims.

19. A computer readable medium, in which a program is embodied, where the program is to make a computer execute the method of at least one of the claims 1 - 18.

20. A computer program product comprising the computer readable medium according to claim 19.

21. Information service unit, including
a communication unit for receiving a search request from a user regarding desired information;
a processing unit for obtaining a search index of information elements associated with the desired information from an index unit and for obtaining classifiers associated with the list of information elements from a rating unit; and
wherein the processing unit is adapted for processing the search index of information elements based on the classifiers.

22. Information service unit of claim 21, wherein the search request includes at least one character string indicating desired information.

23. Information service unit of at least one of the claims 21 and 22, wherein the search index includes addresses of storage locations of information elements.

24. Information service unit of at least one of the claims 21 - 23, wherein the index unit is adapted to select the information elements using a key word search.

25. Information service unit of at least one of the claims 21 - 24, wherein a classifier reflects a user rating and indicates a quality of a corresponding information element.

26. Information service unit of at least one of the claims 21 - 25, wherein the communication unit is adapted to receive a user input of at least one quality rating in association with an information element, and wherein the processing unit is adapted to utilize the at least one quality rating to form a classifier of the information element.

27. Information service unit of at least one of the claims 21 - 26, wherein the processing unit is adapted to derive the classifiers from quality ratings of a plurality of users.

28. Information service unit of at least one of the claims 21 - 27, wherein a quality rating includes at least one of the group consisting of:
- clarity of the information element;
- conciseness of the information element; and
- problem solving quality of the information element.

29. Information service unit of at least one of the claims 21 - 28, wherein the information elements include system information elements and user information elements, wherein users can enter or modify at least the user information elements.

30. Information service unit of at least one of the claims 21 - 29, wherein the processing unit is adapted to order the search index in accordance with the classifiers of the information elements received from the rating unit.

31. Information service unit of at least one of the claims 21 - 30, wherein the processing unit is adapted to weigh the classifiers in dependence on the property of being a service information element or user information element.

32. Information service unit of at least one of the claims 21 - 31, including generating a user index based on at least part of the search index.

33. Information service unit of at least one of the claims 21 - 32, wherein the communication unit is adapted to transmit the user index to a user, if classifiers associated with the list of information elements are unavailable.

34. Information service unit of at least one of the claims 21 - 33, wherein the user index includes character strings indicative of the information elements and addresses of storage locations of the information elements.

35. Information service unit of at least one of the claims 21 - 34, adapted to maintain a plurality of classifiers for a user information element, each of the plurality of classifiers corresponding to a group of at least one search string and wherein the processing unit is adapted to perform the processing operation using a classifier selected from the plurality of classifiers based on the search string.

36. Information service unit of at least one of the claims 21 - 35, wherein the communication unit is adapted to enable a system administrator to set at least one of the elements of the group consisting of:
- the predetermined number of information elements;
- a number of elements of a first sub-list including system information elements and a number of elements of a second sub-list including user information elements;
- weights for weighting the classifiers.

37. Information service unit of at least one of the claims 21 - 36, in communication with a user over a communications network.
